Europäisches Patentamt

European Patent Office

Office européen des brevets

(19)

(11)  **EP 1 200 520 B1**

(12)  **FASCICULE DE BREVET EUROPEEN**

(45) Date de publication et mention
de la délivrance du brevet:
**13.09.2006  Bulletin 2006/37**

(21) Numéro de dépôt: **00952998.3**

(22) Date de dépôt: **03.07.2000**

(51) Int Cl.:
***C08L 23/04*** *(2006.01)*      ***C08L 23/10*** *(2006.01)*
*C08L 23/04* *(2006.01)*      *C08L 23/10* *(2006.01)*
*C08L 23/10* *(2006.01)*      *C08L 23/04* *(2006.01)*

(86) Numéro de dépôt international:
**PCT/EP2000/006233**

(87) Numéro de publication internationale:
**WO 2001/002482 (11.01.2001 Gazette 2001/02)**

(54) **COMPOSITIONS SOUPLES A BASE DE POLYMERES DU PROPYLENE**

WEICHE ZUSAMMENSETZUNGEN AUF BASIS VON PROPYLENPOLYMEREN

FLEXIBLE COMPOSITIONS BASED ON PROPYLENE POLYMERS

(84) Etats contractants désignés:
**AT BE CH CY DE DK ES FI FR GB GR IE IT LI LU
MC NL PT SE**

(30) Priorité: **06.07.1999  BE 9900463**

(43) Date de publication de la demande:
**02.05.2002  Bulletin 2002/18**

(73) Titulaire: **Innovene Manufacturing Belgium NV
2040 Antwerpen (BE)**

(72) Inventeurs:
• **MIKIELSKI, Raymond
B-1310 La Hulpe (BE)**
• **COSTA, Jean-Louis
B-1850 Grimbergen (BE)**

(74) Mandataire: **Smith, Julian Philip Howard et al
COMPASS PATENT LLP
Compass Point
79-87 Kingston Road
Staines, Middlesex TW18 1DT (GB)**

(56) Documents cités:
**EP-A- 0 704 462      EP-A- 0 719 829
EP-A- 0 850 756      US-A- 5 389 448
US-A- 5 856 406**

**Description**

La présente invention concerne des compositions souples à base de polymères du propylène. Elle concerne plus particulièrement des compositions souples à base de copolymères statistiques du propylène et de plastomères exemptes de fractions élastomériques.

Les polymères et les compositions polymériques souples trouvent des débouchés multiples dans des domaines aussi divers que ceux des films, des feuilles, du recouvrement de sols, des câbles, etc. Pour ces applications, on a souvent recours à des polymères plastifiés du chlorure de vinyle. Toutefois, ces derniers peuvent poser des problèmes liés à la migration des plastifiants utilisés pour les assouplir ou encore à l'émission de produits chlorés lors de leur incinération.

A titre d'alternative, on a déjà proposé de recourir à des polymères du propylène dits souples tels que des copolymères à blocs du propylène comprenant des fractions cristallines et/ou semi-cristallines et des fractions élastomériques (cf. par exemple EP-A-373660 et EP-A-416379). On a également déjà proposé de produire des compositions souples par mélange de copolymères à blocs du propylène contenant des fractions élastomériques avec des plastomères constitués de copolymères de l'éthylène avec des alpha-oléfines produits à l'intervention de catalyseurs métallocènes (WO 98/54260).

US 586 406 décrit les compositions à base de polypropylène et de copolymère d'ethylène ayant de bonnes propriétés de transparence et de résistance aux chocs à basse température.

La présente invention vise à procurer de nouvelles compositions souples à base de polymères du propylène exemptes de fractions élastomériques. A cet effet, l'invention concerne des compositions souples à base de polymères du propylène exemptes de fractions élastomériques telles que définies dans la revendication 1.

La teneur globale en unités monomériques dérivées de l'éthylène et/ou d'alpha-oléfines en $C_4$ à $C_8$ du copo-lymère statistique du propylène A) est généralement comprise entre 3 et 20 % en poids. Le ou les comonomères du propylène entrant dans la composition du copolymère statistique A) sont généralement choisis parmi l'éthylène et les alpha-oléfines en $C_4$ à $C_6$. On donne la préférence à l'éthylène, au butène et à l'hexène et, en particulier à l'éthylène et au butène.

Dans le cadre de la présente invention, la teneur en unités monomériques dérivées de l'éthylène et/ou des alpha-oléfines en $C_4$ à $C_8$ du copolymère statistique A) et déterminée par spectrométrie IR à transformer de FOURIER. En particulier, la teneur en unités monomériques dérivées de l'éthylène est déterminée en utilisant les bandes d'absorption à 732 $cm^{-1}$ et 720 $cm^{-1}$ et celle de butène en utilisant la bande à 767 $cm^{-1}$.

Les copolymères statistiques du propylène A) mis en oeuvre dans les compositions selon l'invention présentent avantageusement une température de fusion au moins égale à 105°C. Le plus souvent, celle-ci ne dépasse pas 135°C.

Une première famille de copolymères statistiques du propylène A) qui conviennent bien pour produire des compositions souples selon l'invention est constituée par les copolymères de propylène et d'éthylène contenant de 3 à 10 % en poids, de préférence de 3 à 6 % en poids et plus particulièrement encore de 3,5 à 5,5 % en poids d'unités monomériques dérivées de l'éthylène. Cette famille de copolymères statistiques du propylène procure des compositions souples présentant une excellente tenue à la température (maintien de la souplesse à température élevée).

Parmi cette première famille de copolymères statistiques, on donne la préférence aux copolymères dont la température de fusion (Tf) satisfait la relation suivante

$$Tf \leq 157,6°C - x \ 5°C \qquad (1)$$

dans laquelle x représente le pourcentage pondéral de l'éthylène, par rapport au copolymère A).

Une deuxième famille de copolymères statistiques du propylène A) qui conviennent bien pour produire des compositions souples selon l'invention est constituée par les copolymères de propylène et de butène contenant de 14 à 20 % en poids d'unités monomériques dérivées du butène. Cette famille de copolymères statistiques du propylène procure des compositions à souplesse plus élevée que les copolymères précités à l'éthylène, mais leur résistance thermique est un peu moindre.

Parmi cette deuxième famille de copolymères statistiques du propylène A), les copolymères dont la température de fusion (Tf) satisfait à la relation (2) ci-après donnent de bons résultats :

$$Tf < 158°C - y \ 1,78°C \qquad (2)$$

dans laquelle y représente le pourcentage pondéral du butène par rapport au copolymère A).

Une troisième famille de copolymères statistiques du propylène A) qui conviennent bien pour produire des compositions souples selon l'invention est constituée par les terpolymères de propylène, d'éthylène et de butène contenant de 0,5 à 2,5 % en poids d'unités monomériques dérivées de l'éthylène et de 5 à 19,5, de préférence de 5 à 15 % en poids d'unités monomériques dérivées du butène.

Pour cette dernière famille, on utilise le plus souvent des polymères répondant à la relation (3)

$$\text{Tf} < 159,3°C - x\ 7,87°C - y\ 1,98°C - 0,43\ xy°C \qquad (3)$$

dans laquelle x et y représentent respectivement les % pondéraux en éthylène et en butène.

Les copolymères statistiques du propylène A) qui sont tout particulièrement préférés dans le cadre de la présente invention sont les copolymères statistiques de propylène et d'éthylène.

Les copolymères statistiques du propylène A) présentent un module en flexion (EMod) mesuré à 23°C selon la norme ASTM D 790M d'environ 400 à 800 MPa et un indice de fluidité mesuré à 230°C sous une charge de 2,16 kg (norme ASTM D 1238,1986) ne dépassant pas 10g/10 min. Par ailleurs, on donne la préférence à des copolymères statistiques du propylène A) qui présentent une répartition homogène des unités monomériques dérivées du (des) comonomère(s) (isotactiques).

Les copolymères statistiques du propylène A) entrant dans les compositions souples selon l'invention peuvent être produits par tout procédé connu pour la copolymérisation du propylène avec de l'éthylène et/ou des alpha-oléfines, tel que par exemple par un procédé en phase gazeuse ou encore en phase liquide en dispersion dans du monomère liquide et au moyen de tout système catalytique de type Ziegler-Natta connu suffisamment actif et productif, permettant de polymériser du propylène sous forme stéréospécifique et pouvant incorporer dans le polymère les quantités requises d'éthylène et/ou d'alpha-oléfine.

Les copolymères statistiques (A) préférés sont avantageusement obtenus par copolymérisation de propylène et d'éthylène au moyen de systèmes catalytiques comprenant un solide à base de trichlorure de titane, un alkylaluminium et éventuellement un donneur d'électrons. Ces systèmes catalytiques ont notamment été décrits dans les demandes de brevet EP-A-0261727 et EP-A-0334411 et dans les brevets USA-A-5204305 et US-A-4210729 (SOLVAY POLYOLEFINS EUROPE - BELGIUM). A même teneur globale en éthylène, les copolymères statistiques de propylène et d'éthylène produits à l'intervention de tels systèmes catalytiques présentent, par rapport aux copolymères produits à l'intervention de catalyseurs dits supportés, une meilleure statisticité, une teneur réduite en oligomères et une meilleure morphologie des poudres.

Les copolymères statistiques de propylène et d'éthylène tout particulièrement préférés répondent à l'équation :

$$[C_{2x5+}] \leq 0,0094\ [C_{2x3}]^2 - 0,0054\ [C_{2x3}] + 0,0375$$

dans laquelle $[C_{2x5+}]$ et $[C_{2x3}]$, exprimés en g/kg et évalués par spectrométrie d'absorption dans l'infra-rouge, représentent respectivement :

$[C_{2x5+}]$ : la teneur en unités éthyléniques correspondant à l'insertion de deux ou plus de deux unités éthyléniques entre deux unités propyléniques, mesurée à 720 cm$^{-1}$, et

$[C_{2x3}]$ : la teneur en unités éthyléniques correspondant à l'insertion d'une unité éthylènique entre deux unités propyléniques, mesurée au maximum d'absorption aux environs de 732 cm$^{-1}$.

La teneur globale du plastomère B) en unités monomériques dérivées des alpha-oléfines en $C_3$ à $C_{10}$ est généralement comprise entre 2,5 et 13 moles %.

Le ou les comonomères de l'éthylène entrant dans la composition du plastomère B) produit à l'intervention d'un catalyseur métallocène sont généralement choisis parmi les alpha-oléfines en $C_3$ à $C_8$. Avantageusement, ils sont choisis parmi les alpha-oléfines telles que le propylène, le butène, l'hexène et l'octène et, de préférence, parmi le butène et l'octène. Un comonomère tout particulièrement préféré est l'octène. Le plastomère B) présente en général un pic de fusion unique dans la région de 50 à 110°C. De préférence, celui-ci se situe entre 60 et 105°C.

Le plastomère B) présente, de préférence, une densité s'élevant à une valeur allant de 0,865 à 0,905 g/cm$^3$. Son indice de fluidité en fondu mesuré à 190°C sous une charge de 2,16 kg (norme ASTM D 1238) est, de préférence, inférieur à 20 g/10 min et, plus particulièrement encore inférieur à 10 g/10 min.

Les plastomères B) qui sont impérativement produits à l'aide d'un catalyseur métallocène présentent des propriétés distinctes de celles des copolymères d'éthylène ayant des densités et des indices de fluidité similaires mais qui sont produits à l'intervention de catalyseurs multisites, tels que les catalyseurs Ziegler-Natta. Ils sont notamment caractérisés par une distribution étroite des masses moléculaires et une répartition homogène des comonomères. La distribution des masses moléculaires $M_w/M_n$ est le plus souvent inférieure à 3,5 et au moins égale à 1,7. De préférence, elle se situe entre 3 et 1,8. Les plastomères B) sont par ailleurs le plus souvent caractérisés par un indice de la largeur de distribution du comonomère ["comonomer distribution breath index (CDBI) tel que défini dans la demande de brevet WO 97/38424] supérieur à 60. De préférence, cet indice est supérieur à 80 et plus particulièrement encore à 90.

A même teneur en comonomères, les plastomères produits à l'intervention de métallocènes présentent par rapport aux plastomères produits à l'intervention de catalyseurs multisites, tels que les catalyseurs Ziegler-Natta, une meilleure statisticité, une teneur réduite en oligomères et une meilleure morphologie de poudre (poudre "free flowing").

Les plastomères B) mis en oeuvre dans les compositions souples selon l'invention constituent des produits connus et commerciaux. A titre d'exemples de plastomères B) convenant particulièrement bien pour réaliser les compositions souples selon l'invention, on peut mentionner les plastomères commerciaux vendus par EXXON sous la marque "EXACT". Ceux-ci se présentent à l'état de granules s'écoulant librement ("free flowing").

Les compositions souples selon l'invention comprennent avantageusement de 80 à 20 parties en poids de copolymère statistique de propylène A) et de 20 à 80 parties en poids de plastomère B) et, plus particulièrement encore de 70 à 30 parties en poids de copolymère statistique A) et de 30 à 70 parties en poids de plastomère B). Il va de soi que les compositions selon l'invention peuvent contenir un ou plusieurs copolymères de propylène A) et/ou un ou plusieurs plastomères B). Les compositions selon l'invention peuvent également contenir un polymère du propylène différent du copolymère A). Des exemples particuliers de ce polymère du propylène sont les homopolymères du propylène ou les copolymères statistiques du propylène contenant jusqu'à 6 % en poids d'éthylène différent du copolymère A). De préférence, le polymère de propylène à une température de fusion supérieure à celle du copolymère A).

Le copolymère de propylène A) et le polymère de propylène sont mis en oeuvre dans des rapports en poids de 10:90 à 90:10, plus particulièrement de 20:80 à 80:20. Des compositions selon l'invention particulièrement préférées parce qu'elles présentent un élargissement de leur plage de température de fusion tout en maintenant une excellente souplesse et une bonne tenue à la température, contiennent un terpolymère de propylène tel que décrit ci-avant à titre de copolymère A), le plastomère B et un copolymère statistique de propylène et d'éthylène contenant de 2 à 5 % en poids d'éthylène.

D'autres compositions selon l'invention convenant bien contiennent un copolymère statistique de propylène contenant de 3 à 6 % en poids d'unités monomériques dérivées d'éthylène répondant à l'équation

$$[C_{2x5+}] \leq 0,0094 \, [C_{2x3}]^2 - 0,0054 \, [C_{2x3}] + 0,0375$$

[copolymère A)], le plastomère B et de 4 à 60 parties en poids d'un copolymère statistique de propylène et d'éthylène contenant de 2 à 5 % en poids d'éthylène différent du copolymère A).

Les propriétés des compositions souples selon l'invention, et notamment leur souplesse et leur tenue à la température, sont modulables en fonction de la teneur relative des constituants polymériques A) et B) et de la nature de chacun d'eux. Les compositions souples selon l'invention présentent un module en flexion (EMod) mesuré à 23°C selon la norme ASTM D 790M au plus égal à 450 MPa. Celui-ci est en général au moins égal à 50 MPa.

Les compositions souples selon l'invention présentent un excellent compromis entre la souplesse, la résistance aux chocs à froid et la tenue à la température dans une large plage d'utilisation (maintien de faibles modules à température élevée). En particulier, elles présentent à la fois une souplesse et une résistance aux chocs à froid nettement améliorées par rapport aux copolymères statistiques du propylène A) et une tenue thermique (maintien de faibles modules en flexion à des températures supérieures à 80°C) nettement améliorée par rapport aux plastomères B). En outre, elles sont transparentes et contiennent des teneurs réduites en oligomères ($C_{12}$-$C_{54}$). En général, celle-ci ne dépasse pas 1250 ppm et le plus souvent 1000 ppm.

Le mode d'obtention des compositions selon l'invention n'est pas critique. Celles-ci peuvent donc être fabriquées par tous les procédés classiques connus de mélange de polymères en fondu. Le plus souvent, le mélange en fondu du copolymère statistique du propylène A) et du plastomère B) est réalisé dans des conditions de température et de durée telles qu'elles induisent la fusion au moins partielle du copolymère statistique du propylène A). De préférence, elles sont telles qu'il y ait fusion complète du copolymère statistique du propylène.

Généralement, le mélange est effectué à une température ne dépassant pas 350°C; le plus souvent cette température ne dépasse pas 300°C; de préférence elle ne dépasse pas 250°C. La température minimale à laquelle le mélange en fondu est effectué est généralement supérieure ou égale à 100°C, le plus souvent cette température est supérieure ou égale à 130°C; de préférence elle est supérieure ou égale à 140°C. On obtient de bons résultats lorsque cette température est supérieure ou égale à 200°C et ne dépasse pas 240°C.

La durée du mélange est choisie en fonction de la nature des constituants polymériques A) et B) et de la température du mélange. La durée optimale pourra être évaluée avantageusement par des essais préalables.

Le mélange du copolymère statistique A) et du plastomère B) peut être effectué dans tout dispositif connu à cet effet. Ainsi, on peut utiliser des malaxeurs internes ou externes. Les malaxeurs internes sont les plus appropriés et parmi ceux-ci les malaxeurs continus tels que les extrudeuses. Les extrudeuses pouvant convenir sont notamment les extrudeuses monovis, les extrudeuses du type co-malaxeur, les extrudeuses bi-vis co-rotatives ou contrarotatives, interpénétrées ou non interpénétrées, et les extrudeuses du type multi-vis. On utilise, de préférence, une extrudeuse du type bi-vis.

Au cours de l'opération de mélange du copolymère statistique du propylène A) et du plastomère B), on peut bien entendu incorporer à la composition l'éventuel polymère du propylène ainsi que divers additifs, tels que, à titres d'exemples non limitatifs, des agents stabilisants, des antiacides, des antioxydants, des colorants organiques ou minéraux, des matériaux de charge, tels que du talc ou des fibres de verre ... En général, le (ou les) copolymère(s) statistique (s) du propylène A), le (ou les) plastomère(s) B) et l'éventuel polymère du propylène sont les seuls constituants polymériques des compositions selon l'invention.

Les compositions selon l'invention peuvent être utilisées comme constituant (par exemple comme mélange-maître) pour produire ultérieurement d'autres compositions.

Les compositions souples selon l'invention peuvent être mises en oeuvre par tous les procédés classiques de transformation des matières thermoplastiques, tels que par exemple par moulage, par extrusion ou par injection, et sur tous les appareillages utilisés habituellement pour la transformation des matières thermoplastiques.

Les compositions souples à base de polymères du propylène selon l'invention conviennent à la réalisation de nombreux articles façonnés souples. Elles conviennent, notamment, pour la fabrication de films, de feuilles souples et de câbles (gainage et isolation). Elles conviennent également pour la fabrication de revêtement de sols, de tubes et de profilés. Les compositions souples selon l'invention conviennent particulièrement bien pour la fabrication, par extrusion, de films et de feuilles souples, ainsi que de câbles et en particulier de films et de feuilles souples, ainsi que de câbles présentant un module en flexion (EMod) mesuré à 23°C selon la norme ASTM D 790M au plus égal à 450MPa.

Les exemples qui suivent sont destinés à illustrer l'invention.

Exemples 1 à 3C

Les exemples 1 et 2 illustrent des compositions selon l'invention contenant un copolymère statistique du propylène obtenu comme décrit à l'exemple 1 du brevet US-A-5204305 (copolymère A) et un plastomère produit à l'intervention d'un catalyseur métallocène (plastomère B). L'exemple 3C donné à titre comparatif concerne le copolymère A seul.

Dans l'exemple 1, on a préparé une composition contenant 50 parties en poids de copolymère A et 50 parties en poids de plastomère B. Dans l'exemple 2, on a préparé une composition contenant 70 parties en poids de copolymère A et 30 parties en poids de plastomère B.

Dans les exemples 1, 2 et 3, on a utilisé à titre de copolymère statistique du propylène A) un copolymère de propylène et d'éthylène contenant 4,3 % en poids d'éthylène présentant les caractéristiques suivantes :

- Température de fusion : 133-132°C
- Indice de fluidité en fondu (230°C,2,16 kg-norme ASTM D 1238, 1986) : 4,50 g/10 min
- Rapport $[C_{2x3}]/[C_{2x5+}]$ : 35/8

Dans les exemples 1 et 2, on a utilisé le plastomère EXACT 8201, copolymère d'éthylène et d'octène, présentant les caractéristiques suivantes :

- Densité : 0,882 g/cm$^3$
- Indice de fluidité en fondu (à 190°C, 2,16 kg - norme ASTM D 1238, 1986) : 1g/10 min
- Rapport $M_w/M_n$ : environ 2,4

Les compositions selon les exemples 1 à 3 contenaient, outre le(s) constituant(s) polymérique(s) précisé(s) ci-dessus, 2000 ppm d'antioxydant et 1000 ppm d'antiacide. Les compositions ont été préparées par mélange des ingrédients et extrusion du mélange dans une extrudeuse à double vis Clextral BC45 avec une température matière de 209°C. Le fourreau de l'extrudeuse comprend 7 modules (six éléments chauffants et une filière conique chauffante de 6 joncs-trous de 4 mm). Les éléments de vis ont un diamètre de 55 mm et la longueur totale de la vis est 30D. Le profil des températures de la vis d'extrusion a été comme suit :

Zone 1 : 81°C
Zone 2 : 170°C
Zone 3 : 179°C

Zone 4 : 199°C
Zone 5 : 199°C
Zone 6 : 199°C
Zone 7 : 198°C
Zone 8 : 200°C

A partir des granules extrudés, on a évalué différentes propriétés des compositions selon les exemples 1 et 2 et du copolymère de propylène selon l'exemple 3C (comparatif) dont les résultats sont consignés dans le Tableau I. Les normes utilisées pour ces évaluations y figurent également. Pour ce qui concerne la désorption thermique, laquelle est une mesure de la teneur en oligomères, celle-ci a été effectuée par chromatographie en phase gazeuse sous helium à 275°C. Les oligomères ($C_{12}$-$C_{54}$), extraits à 275°C, ont été piégés à basse température (-196°C) avant d'être rechauffés à 350°C et envoyés dans la colonne de chromatographie gazeuse.

Tableau I

| Propriété évaluée | Norme | Unité | N° de l'exemple | | |
|---|---|---|---|---|---|
| | | | 1 | 2 | 3C |
| Indice de fluidité en fondu (230 °C, 2,16 kg) | ASTM D 1238 | g/10 min | ~ 3,5 | ~ 3,5 | ~ 4,5 |
| Module en flexion à 23°C | ASTM D 790 M | MPa | 275 | 400 | 700 |
| Résistance aux chocs à -40°C (barreau entaillé) | ISO 180/1A | | pas de rupture | pas de rupture | rupture |
| Température de fragilité | ASTM D 746 | °C | < -60 | -45 | 0 |
| Résistance à la traction | ASTM D 638 M | MPa | 19 | 24 | 21 |
| Allongement à la rupture | ASTM D 638 M | % | > 600 | > 600 | > 600 |
| Température de fusion | ASTM D 3418 | °C | 133 | 133 | 133 |
| Température de ramollissement Vicat | ASTM D 1525 | °C | 78 | 94 | 120 |
| Température de distorsion à la chaleur (HDT) | ASTM D 648 | °C | 36 | 38 | ND * |
| Dureté Shore D à 23°C | ASTM D 2240 | | 47 | 51 | 62 |
| Desorption thermique (oligomères $C_{12}$-$C_{54}$) | cf. ci-dessus | mg/kg | 650 | 700 | 850 |
| * ND : non déterminée | | | | | |

Exemples 4 à 6

Les exemples 4 à 6 illustrent des compositions selon l'invention contenant, à titre de copolymère A), un terpolymère de propylène contenant 0,7 % en poids d'éthylène et 17,4 % en poids de butène présentant les caractéristiques suivantes :

- Température de fusion : 120 °C
- Indice de fluidité en fondu :

Le plastomère B) est le même que celui des exemples 1 et 2 et les compositions ont été obtenues comme décrit dans lesdits exemples. Les propriétés des compositions ainsi obtenues sont reprises dans le Tableau II.

Tableau II

| Propriété évaluée | Unité | N° de l'exemple | | |
|---|---|---|---|---|
| | | 4 | 5 | 6 |
| Teneur en copolymère A) | % | 70 | 50 | 40 |
| Teneur en plastomère B) | % | 30 | 50 | 60 |
| Indice de fluidité en fondu (230 °C, 2,16 kg) | g/10 min | 3,2 | 2,8 | 2,5 |
| Module en flexion à 23°C | MPa | 265 | 156 | 92 |

(suite)

| Propriété évaluée | Unité | N° de l'exemple | | |
|---|---|---|---|---|
| | | 4 | 5 | 6 |
| Résistance aux chocs à -40°C (barreau entaillé) | -- | pas de rupture | pas de rupture | pas de rupture |
| Température de fragilité | °C | -55 | < -60 | < -60 |
| Résistance à la traction | MPa | 11,1 | 7,9 | 6,5 |
| Allongement à la rupture | % | > 600 | > 500 | > 500 |
| Température de fusion | °C | 80/110 | 76/114 | 74/109 |
| Température de ramollissement Vicat | °C | 79 | 69,4 | 64,3 |
| Température de distorsion à la chaleur (HDT) | °C | 34,5 | 30,2 | non mesurable |
| Dureté Shore D à 23°C | | 50 | 46,2 | 41,9 |
| Desorption thermique (oligomères $C_{12}$-$C_{54}$) | ppm | 750 | 770 | 700 |

Exemple 7

L'exemple 7 illustre une composition contenant 35 parties en poids du terpolymère utilisé dans les exemples 4 à 6, 30 parties en poids du plastomère EXACT 8201 et 35 parties en poids d'un copolymère statistique du propylène contenant 3,2 % en poids d'éthylène et ayant un indice de fluidité en fondu de 2 g/10 min. La composition, préparée comme aux exemples précédents, présente :

Indice de fluidité en fondu (230 °C, 2,16 kg) : 4 g/10 min
Module en flexion à 23°C : 415 MPa
Température de fragilité : -41°C
Résistance à la traction : 20 MPa
Allongement à la rupture : > 500 %
Température de fusion : 77/138/145°C
Température de ramollissement Vicat : 78,8°C
Température de distorsion à la chaleur (HDT) : 37,7°C
Dureté Shore D à 23°C : 51,7
Desorption thermique (oligomères $C_{12}$-$C_{54}$) : 730 ppm

**Revendications**

1. Compositions souples à base de polymères du propylène exemptes de fractions élastomériques et présentant un module en flexion (EMod) mesuré à 23°C selon la norme ASTM D 790M au plus égal à 450 MPa, comprenant :

A) de 10 à 90 parties en poids de copolymère statistique du propylène et d'au moins un comonomère choisi parmi l'éthylène et les alpha-oléfines en $C_4$ à $C_8$ ayant une température de fusion au moins égale à 100°C et ne dépassant pas 140°C, un module en flexion (EMod) mesuré à 23°C selon la norme ASTM D 790M d'environ 400 à 800 Mpa, et un indice de fluidité mesuré à 230°C sous une charge de 2,16 kg (norme ASTM D 1238,1986) de 0,5 à 10 g/10 min, et
B) de 90 à 10 parties en poids de plastomère produit à l'aide d'un catalyseur métallocène et constitué d'un copolymère statistique d'éthylène et d'au moins une alpha-oléfine en $C_3$ à $C_{10}$ ayant une densité de 0,860 à 0,920 g/cm$^3$, un indice de fluidité en fondu mesuré à 190°C sous une charge de 2,16 kg (norme ASTM D 1238, 1986) de 0,5 à 30 g/10min, une distribution des masses moléculaires $M_w$/$M_n$ au plus égale à 4.

2. Compositions souples à base de polymères du propylène suivant la revendication 1, **caractérisées en ce que** le copolymère statistique du propylène est choisi parmi les copolymères de propylène et d'éthylène contenant de 3 à 6 % en poids d'unités monomériques dérivées de l'éthylène.

3. Compositions souples à base de polymères du propylène suivant la revendication 1, **caractérisées en ce que** le copolymère statistique du propylène est choisi parmi les copolymères de propylène et de butène contenant de 14 à 20 % en poids d'unités monomériques dérivées du butène.

**4.** Compositions souples à base de polymères du propylène suivant la revendication 1, **caractérisées en ce que** le copolymère statistique du propylène est choisi parmi les terpolymères de propylène, d'éthylène et de butène contenant de 0,5 à 2,5 % en poids d'unités monomériques dérivées de l'éthylène et de 5 à 15 % en poids d'unités monomériques dérivées du butène.

**5.** Compositions souples à base de polymères du propylène suivant la revendication 1, **caractérisées en ce que** le plastomère est constitué d'un copolymère statistique d'éthylène et d'une alpha-oléfine contenant de 2,5 à 13 moles % d'alpha-oléfine choisie parmi le butène et l'octène.

**6.** Compositions souples à base de polymères du propylène suivant les revendications 1 et 5, **caractérisées en ce que** le plastomère est constitué d'un copolymère statistique d'éthylène et d'octène.

**7.** Compositions souples à base de polymères du propylène suivant les revendications 1, 5 et 6, **caractérisées en ce que** le plastomère présente une densité de 0,865 à 0,905 g/cm$^3$, un indice de fluidité mesuré à 190°C sous une charge de 2,16 kg (norme ASTM D 1238-1986) inférieur à 20 g/10min et une distribution des masses moléculaires $M_w/M_n$ inférieure à 3,5 et au moins égale à 1,7.

**8.** Compositions souples à base de polymères du propylène suivant les revendications 1 à 7, **caractérisées en ce qu'**elles contiennent de 80 à 20 parties de copolymère statistique du propylène et de 20 à 80 parties de plastomère produit à l'aide d'un catalyseur métallocène.

**9.** Compositions souples à base de polymères du propylène suivant les revendications 1 à 8, comprenant plusieurs copolymères statistiques du propylène A) et/ou plusieurs plastomères B).

**10.** Compositions souples à base de polymères du propylène suivant les revendications 1 à 8, contenant un polymère du propylène différent du copolymère A).

**11.** Compositions selon la revendication 10 dans lesquelles le polymère du propylène différent du copolymère A) a une température de fusion supérieure à 140°C.

**12.** Utilisation des compositions souples suivant les revendications 1 à 11 pour la fabrication de films et de feuilles souples présentant un module en flexion (EMod) mesuré à 23°C selon la norme ASTM D 790M au plus égal à 450 MPa.

**13.** Utilisation des compositions souples suivant les revendications 1 à 11 pour la fabrication de câbles, d'isolants et de gaines de câbles présentant un module en flexion (EMod) mesuré à 23°C selon la norme ASTM D 790M au plus égal à 450 MPa.

**14.** Films ou feuilles souples obtenus en mettant en oeuvre une composition selon l'une quelconque des revendications 1 à 11.

**15.** Câbles ou isolants et gaines de câbles obtenus en mettant en oeuvre une composition selon l'une quelconque des revendications 1 à 11.

**Claims**

**1.** Flexible compositions based on polymers of propylene that are without elastomeric fractions and exhibit a modulus in flexure (EMod) measured at 23 °C according to the standard ASTM D 790M at most equal to 450 MPa, containing:

A) from 10 to 90 parts by wt of random copolymer of propylene and at least one comonomer chosen from ethylene and $C_4$ to $C_8$ alpha-olefins having a melting temperature at least equal to 100 °C and not exceeding 140 °C, a modulus in flexure (EMod) measured at 23 °C according to the standard ASTM D 790M of about 400 to 800 MPa and a melt flow index measured at 230 °C under a load of 2.16 kg (standard ASTM D 1238, 1986) of 0.5 to 10 g/10 min, and

B) from 90 to 10 parts by wt of plastomer produced by means of a metallocene catalyst and composed of a random copolymer of ethylene and at least one $C_3$ to $C_{10}$ alpha-olefin having a density of 0.860 to 0.920 g/cm$^3$, a melt flow index measured at 190 °C under a load of 2.16 kg (standard ASTM D 1238, 1986) of 0.5 to 30 g/10 min and a molecular weight distribution $M_w/M_n$ at most equal to 4.

2. Flexible compositions based on polymers of propylene according to claim 1, **characterised in that** the random copolymer of propylene is chosen from copolymers of propylene and ethylene containing from 3 to 6 wt % of monomer units derived from ethylene.

3. Flexible compositions based on polymers of propylene according to claim 1, **characterised in that** the random copolymer of propylene is chosen from copolymers of propylene and butene containing from 14 to 20 wt % of monomer units derived from butene.

4. Flexible compositions based on polymers of propylene according to claim 1, **characterised in that** the random copolymer of propylene is chosen from terpolymers of propylene, ethylene and butene containing from 0.5 to 2.5 wt % of monomer units derived from ethylene and from 5 to 15 wt % of monomer units derived from butene.

5. Flexible compositions based on polymers of propylene according to claim 1, **characterised in that** the plastomer is composed of a random copolymer of ethylene and an alpha-olefin containing from 2.5 to 13 moles % of alpha-olefin chosen from butene and octene.

6. Flexible compositions based on polymers of propylene according to claims 1 to 5, **characterised in that** the plastomer is composed of a random copolymer of ethylene and octene.

7. Flexible compositions based on polymers of propylene according to claims 1, 5 and 6, **characterised in that** the plastomer exhibits a density of 0.865 to 0.905 g/cm$^3$, a flow index measured at 190 °C under a load of 2.16 kg (standard ASTM D 1238- 1986) of less than 20 g/10 min and a molecular weight distribution $M_w/M_n$ of less than 3.5 and at least equal to 1.7.

8. Flexible compositions based on polymers of propylene according to claims 1 to 7 **characterised in that** they contain from 80 to 20 parts of random copolymer of propylene and from 20 to 80 parts of plastomer produced by means of a metallocene catalyst.

9. Flexible compositions based on polymers of propylene according to claims 1 to 8, containing a plurality of random polymers of propylene A) and/or a plurality of plastomers B).

10. Flexible compositions based on polymers of propylene according to claims 1 to 8, containing a polymer of propylene different from copolymer A).

11. Compositions according to claim 10 in which the polymer of propylene different from copolymer A) has a melting temperature of more than 140 °C.

12. Use of the flexible compositions according to claims 1 to 11 for the manufacture of films and flexible foils having a modulus at flexure (EMod) measured at 23 °C according to standard ASTM D 790M at most equal to 450 MPa.

13. Use of the flexible compositions according to claims 1 to 11 for the manufacture of cables, insulators and cable ductings having a modulus at flexure (EMod) measured at 23 °C according to standard ASTM D 790M at most equal to 450 MPa.

14. Films or flexible foils obtained by employing a composition according to any one of claims 1 to 11.

15. Cables or insulators and cable ductings obtained by employing a composition according to any one of claims 1 to 11.

**Patentansprüche**

1. Weiche Zusammensetzungen auf der Basis von Propylenpolymeren, die frei sind von Elastomeranteilen und die einen Biegemodul (EMod), gemessen bei 23 °C gemäß der Norm ASTM D 790M, von höchstens gleich 450 MPa aufweisen, umfassend:

A) 10 bis 90 Gew.-Teile statistisches Copolymer von Propylen und wenigstens einem Comonomer, das unter

Ethylen und den $C_4$- bis $C_8$-alpha-Olefinen ausgewählt ist, mit einer Schmelztemperatur von wenigstens gleich 100 °C, die 140 °C nicht übersteigt, einem Biegemodul (EMod), gemessen bei 23 °C gemäß der Norm ASTM D 790M, von etwa 400 bis 800 MPa und einem Schmelzindex, gemessen bei 230 °C unter einer Last von 2,16 kg (Norm ASTM D 1238, 1986), von 0,5 bis 10 g/10 min und

B) 90 bis 10 Gew.-Teile Plastomer, hergestellt mittels eines Metallocen-Katalysators, das aus einem statistischen Copolymer von Ethylen und wenigstens einem $C_3$- bis $C_{10}$-alpha-Olefin besteht, mit einer Dichte von 0,860 bis 0,920 g/cm$^3$, einem Schmelzindex, gemessen bei 190 °C unter einer Last von 2,16 kg (Norm ASTM D 1238, 1986), von 0,5 bis 30 g/10 min, einer Molekülmassenverteilung $M_w/M_n$ von höchstens gleich 4.

2. Weiche Zusammensetzungen auf der Basis von Propylenpolymeren gemäß Anspruch 1, **dadurch gekennzeichnet, dass** das statistische Propylencopolymer unter den Copolymeren von Propylen und Ethylen mit 3 bis 6 Gew.-% von Ethylen abgeleiteten Monomereinheiten ausgewählt ist.

3. Weiche Zusammensetzungen auf der Basis von Propylenpolymeren gemäß Anspruch 1, **dadurch gekennzeichnet, dass** das statistische Propylencopolymer unter den Copolymeren von Propylen und Buten mit 14 bis 20 Gew.-% von Buten abgeleiteten Monomereinheiten ausgewählt ist.

4. Weiche Zusammensetzungen auf der Basis von Propylenpolymeren gemäß Anspruch 1, **dadurch gekennzeichnet, dass** das statistische Propylencopolymer unter den Terpolymeren von Propylen, Ethylen und Buten mit 0,5 bis 2,5 Gew.-% von Ethylen abgeleiteten Monomereinheiten und 5 bis 15 Gew.-% von Buten abgeleiteten Monomereinheiten ausgewählt ist.

5. Weiche Zusammensetzungen auf der Basis von Propylenpolymeren gemäß Anspruch 1, **dadurch gekennzeichnet, dass** das Plastomer aus einem statistischen Copolymer von Ethylen und einem alpha-Olefin mit 2,5 bis 13 Mol-% alpha-Olefin, das unter Buten und Octen ausgewählt ist, besteht.

6. Weiche Zusammensetzungen auf der Basis von Propylenpolymeren gemäß den Ansprüchen 1 und 5, **dadurch gekennzeichnet, dass** das Plastomer aus einem statistischen Copolymer von Ethylen und Octen besteht.

7. Weiche Zusammensetzungen auf der Basis von Propylenpolymeren gemäß den Ansprüchen 1, 5 und 6, **dadurch gekennzeichnet, dass** das Plastomer eine Dichte von 0,865 bis 0,905 g/cm$^3$, einen Schmelzindex, gemessen bei 190 °C unter einer Last von 2,16 kg (Norm ASTM D 1238-1986), von kleiner als 20 g/10 min und eine Molekülmassenverteilung $M_w/M_n$ von kleiner als 3,5 und wenigstens gleich 1,7 aufweist.

8. Weiche Zusammensetzungen auf der Basis von Propylenpolymeren gemäß den Ansprüchen 1 bis 7, **dadurch gekennzeichnet, dass** sie 80 bis 20 Teile statistisches Propylencopolymer und 20 bis 80 Teile Plastomer, hergestellt mittels eines Metallocen-Katalysators, enthalten.

9. Weiche Zusammensetzungen auf der Basis von Propylenpolymeren gemäß den Ansprüchen 1 bis 8, die mehrere statistische Propylencopolymere A) und/oder mehrere Plastomere B) umfassen.

10. Weiche Zusammensetzungen auf der Basis von Propylenpolymeren gemäß den Ansprüchen 1 bis 8, die ein vom Copolymer A) verschiedenes Propylenpolymer umfassen.

11. Zusammensetzungen gemäß Anspruch 10, worin das vom Copolymer A) verschiedene Propylenpolymer eine Schmelztemperatur über 140 °C hat.

12. Verwendung der weichen Zusammensetzungen gemäß den Ansprüchen 1 bis 11 zur Herstellung von weichen Filmen und Folien, die einen Biegemodul (EMod), gemessen bei 23 °C gemäß der Norm ASTM D 790M, von höchstens gleich 450 MPa aufweisen.

13. Verwendung der weichen Zusammensetzungen gemäß den Ansprüchen 1 bis 11 zur Herstellung von Kabeln, Isoliermaterialien und Kabelummantelungen, die einen Biegemodul (EMod), gemessen bei 23 °C gemäß der Norm ASTM D 790M, von höchstens gleich 450 MPa aufweisen.

14. Weiche Filme oder Folien, erhalten durch Verwendung einer Zusammensetzung gemäß einem der Ansprüche 1 bis 11.

15. Kabel oder Isoliermaterialien und Kabelummantelungen, erhalten durch Verwendung einer Zusammensetzung gemäß einem der Ansprüche 1 bis 11.